# EUROPEAN PATENT APPLICATION

(11) **EP 4 029 601 A1**
(43) Date of publication of application: **20.07.2022**
(21) Application number: 21151312.2
(22) Date of filing: 13.01.2021
(51) Int. Cl.: B01J 2/16, C05C 3/00, C05C 9/00, C05G 5/12, B01D 53/58

(54) **PLANT AND PROCESS OF GRANULATING UREA AMMONIA SULPHATE**

(71) Applicant: Green Granulation Ltd., Hong Kong (HK)
(72) Inventor: Monstrey, Ken Gaspard Marcel, 9960 Assende (BE); Wang, Weizhen, Beijing (CN)
(74) Representative: De Vries & Metman

(57) **Abstract**

Process and plant for the production of a urea ammonium sulfate granulate. In a first fluidized bed a first spraying liquid is sprayed comprising a urea melt and an aqueous solution of ammonium sulfate, e.g. a (near-)eutectic mixture. The bed temperature is below the crystallization temperature of the sprayed mixture. In a next compartment the granulate is fluidized to form a second fluidized bed. A second spraying liquid comprising a urea melt is sprayed into the second fluidized bed with a bed temperature higher than the bed temperature of the first fluidized bed and lower than the crystallization temperature of the sprayed second spraying liquid.

## Description

The invention relates to a process of granulating urea ammonia sulfate, in particular for use as a fertilizer.

Granulation of urea is usually carried out in a fluidized bed reactor comprising one or more compartments. An inlet side of the granulator is provided with a nuclei inlet for solid nuclei forming a bed which is fluidized by fluidization air. The nuclei gradually flow from the inlet to a granulate outlet at the opposite side of the granulator. An aqueous solution of urea - the urea melt - is sprayed into the fluidized bed by sprayers on the granulator floor. The urea melt typically has a water content of about 1 to about 5 wt%. While the water content evaporates, the urea melt deposits on the passing nuclei and crystallizes to form granules. To this end, the fluidized bed should have a bed temperature which is well below the crystallization temperature of the urea melt, yet high enough to ensure sufficient evaporation of the moisture content.

Used fluidization air discharged from the granulator contains ammonia and ammonium cyanate. Increasingly stricter regulations for emission of free ammonia require that the ammonia content is separated before the air is released to the atmosphere. To this end the air is usually scrubbed with an aqueous acidic scrubbing solution, typically comprising sulfuric acid. To meet these stricter requirements, scrubbing liquids with a lower pH are used, having a higher acid content.

In this scrubbing process ammonia is converted to ammonium sulfate, which is particularly useful as a fertilizer compound.

The scrubber also separates part of the ammonium cyanate from the exhaust air. Depending on the pH of the scrubber liquid, the ammonium cyanate can hydrolyze to form ammonia NH3 and carbon dioxide, CO2. The NH3 will again form ammonium sulfate.

Due to the stricter emission requirements, more ammonia must be removed from the exhaust air, so a lower pH is required and more sulfuric acid is used. Due to the increased availability of sulfuric acid and the lower pH, more ammonium sulfate is generated and more ammonium cyanate is hydrolyzed to form to ammonium.

Ammonium sulfate is typically used as a valuable component in fertilizers. Therefore, the ammonium sulfate solution can be recycled and added to the urea melt fed to the granulator. Ammonium sulfate is soluble in a urea melt with a maximum concentration of just below 20 wt%. The ammonia and ammonium cyanate contents in the exhaust air result in an amount of ammonium sulfate, sufficient to produce a urea ammonium sulfate mixture with about 2 - 13 wt% of ammonium sulfate. Such a mixed solution of ammonium sulfate and urea forms a eutectic or near-eutectic mixture. Such a eutectic or near-eutectic mixture has a lower crystallization temperature than the crystallization temperature of its constituents. For example the crystallization temperature of urea with about 10 wt% ammonium sulfate is up to about 15 °C lower than the crystallization point of pure urea with the same water content. Consequently, such an ammonium sulphate/urea melt can only be granulated if the bed temperature is lowered by about 15°C below the bed temperature that would be used for pure urea melt with the same water content. Due to this low bed temperature the water content is not sufficiently evaporated. This results in a granulate with a high moisture content, all the more so because ammonium sulfate makes the product more hygroscopic and more difficult to dry than pure urea. The relatively moist and brittle granulate has a moisture content well above 0,3 wt% and tends to form lumps during storage making it difficult to store, process or use. In places where air humidity is high, such as marine or tropical environments, the material may even become unusable as a fertilizer.

US 2013/0319060 teaches to supply a mixed urea/ammonium sulfate stream to the granulator compartment at the nuclei inlet side and a pure urea solution at the granulate outlet side. For the mixed stream, ammonium sulfate content is highest at the nuclei inlet side and gradually decreases in the direction of the granulate outlet of the granulator. This process only works with limited amounts of ammonium sulfate.

WO 2017/007315 teaches that the ammonium sulfate content of the fertilizer granulate can be increased by spraying urea slurry with a high ammonium sulfate content in a first granulator followed by spraying a urea solution with a low ammonium sulfate content in a second granulator. By first spraying a slurry instead of a solution, the ammonium sulfate content can be substantially increased. This system consumes substantially more ammonium sulfate than available by recycling ammonium sulfate from the scrubber. Moreover, a high ammonium sulfate content means a relatively low urea content, and consequently lower quality.

The object of the invention is to provide a process allowing to obtain a high quality urea ammonium sulfate granulate with a lower residual moisture content, allowing to recycle or add ammonium sulfate in a valuable manner.

The object of the invention is achieved with a process for the production of a urea ammonium sulfate granulate, using a granulator and providing a first fluidized bed of a granulate precursor material in a compartment of the granulator, the first fluidized bed continuously moving from a nuclei inlet to an outlet of the compartment. A first spraying liquid comprising a urea melt and an aqueous solution of ammonium sulfate is sprayed into the first fluidized bed, which has a bed temperature below the crystallization temperature of the sprayed mixture. Granulate material is subsequently moved to a next compartment where it is fluidized to form a second fluidized bed while a second spraying liquid comprising a urea melt is sprayed into the second fluidized bed, the second fluidized bed having a bed temperature which is higher than the first fluidized bed and lower than the crystallization temperature of the sprayed second spraying liquid.

The first spraying liquid will typically have a lower crystallization temperature than the second spraying liquid. The first spraying liquid may for example be a eutectic or near-eutectic urea ammonium sulfate mixture, e.g., with about 1 to about 5 wt% water and about 2 to about 15 wt%, e.g. up to about 12 wt% of ammonium sulfate, e.g., about 5 wt% to about 12 wt%. The second spraying liquid can be a pure urea melt, or a non-eutectic urea ammonium sulfate mixture having a crystallization temperature of less than 5°C below the crystallization temperature of a pure urea melt.

In this respect, pure urea melt refers to urea melt without technically relevant amounts of ammonium sulfate. Near-eutectic urea ammonium sulfate mixture refers to any aqueous urea ammonium sulfate solution with a crystallization temperature of at least 5°C, e.g., at least 8°C, e.g., at least 10°C below the crystallization temperature of a pure urea melt with the same water content. Near-eutectic includes eutectic. Non-eutectic refers to any composition of the aqueous urea ammonium sulfate mixture outside the near-eutectic range. The non-eutectic mixture can for example be:
- a hypereutectic mixture of a urea melt and at least 15 wt%, e.g., at least 18 wt.%, e.g. about 20 wt% of ammonium sulfate in an aqueous solution with about 1 - 5 wt% of water; or
- a hypoeutectic mixture of a urea melt and at most about 2 wt% of ammonium sulfate in an aqueous solution with about 1 - 5 wt% of water. If the ammonium sulfate content in the hypereutectic mixture exceeds 20 wt%, part of the ammonium sulfate will not be dissolved but rather form a dispersion. Such a dispersion can also be used, if so desired.

The bed temperature of the first fluidized bed may for example be at least 5°C, e.g., at least 10°C below the crystallization temperature of the sprayed mixture. The second fluidized bed may for example have a bed temperature, which is at least 5°C, e.g., at least 10°C below the crystallization temperature of the sprayed pure urea melt.

The urea ammonium sulfate mixture sprayed in the first compartment has a relatively low crystallization temperature. If, for example, the water content in the mixture is 2,5 wt% and the ammonium sulfate content is about 10,5 wt%, the crystallization temperature is 111°C. If the water content is 5 wt% and the ammonium sulfate content is about 10 wt%, the crystallization temperature is 103°C. The bed temperature in the first compartment should be below this temperature, for example about 95 - 100°C.

In the second compartment, the spraying liquid is non-eutectic, e.g., pure urea melt, so the crystallization temperature of the sprayed material is higher. If, for example, the water content in the urea melt is 2,5 wt%, the crystallization temperature of the urea melt is 124°C. If the water content is 5 wt%, the crystallization temperature is 118°C. The bed temperature in the second compartment should be below this crystallization temperature, but can be substantially higher than in the first compartment, e.g., about 105 - 112°C. This is sufficiently high to produce a granulate with an acceptably low residual moisture content. To prevent melting of the urea ammonium sulfate layer of the granules in the second compartment, the bed temperature should be below the melting point of the urea ammonium sulfate, which is 121°C where the urea ammonium sulfate has a water content of 0 %.

Moving the intermediate granulate material from the first compartment to the second compartment will typically take place as a continuous flow.

The first and second compartments can be part of the same granulator or of different granulators. Optionally, further granulation compartments can be present between the two compartments and/or before the first compartment and/or after the second compartment. For example, if the spraying liquid in the second compartment is a hyper-eutectic urea ammonium sulfate, the granules can be further treated in a third granulator compartment using a spraying liquid of a pure urea melt.

While the temperature of the sprayed melt is substantially above its crystallization temperature, the bed temperature of the fluidized bed should be substantially below that temperature. Outside the scope of the sprayers, the bed temperature of the fluidized bed is substantially homogeneously. The bed temperature should be measured outside a spraying zone above each sprayer. The bed temperature can for example be measured at a distance above the fluidized bed. The bed temperature is controlled by controlling flow rate and temperature of the fluidization air. Heat is also dissipated by evaporation of water present in the urea melt. Additionally, the temperature can be controlled by recycling undersized and/or crushed oversized granules of rejected granulate material.

In this respect, granulate precursor material is any particulate material in the first fluidized bed. Intermediate granulate material is any particulate material in the second fluidized bed. Both are a mix of granules in different stages of granulation.

In a particular embodiment, the mean residence time of the intermediate granulate material in the second fluidized bed is controlled to produce a final granulate having a residual moisture content of at most 0,3 wt%. The mean residence time in the second fluidized bed can for example be about 10 - 15 minutes, but can also be more or less if so desired.

A suitable source for ammonium sulfate is used scrubber liquid from a scrubber used for scrubbing exhaust air discharged from the granulator. This scrubber liquid typically is an aqueous solution of sulfuric acid converting ammonia and ammonium cyanate from the exhaust to ammonium sulfate in an aqueous solution. This scrubber liquid can be collected and be mixed with urea melt in order to produce the desired mixture. Optionally, the concentration of the ammonium sulfate can first be adjusted, e.g., to a solution containing about 1 to 5 wt% of water. Additionally or alternatively, other sources of ammonium sulfate can also be used.

To meet the increasingly stricter environmental regulations, a low pH scrubber liquid can be used, e.g., having a pH below 5, e.g., below 3. The lower the pH, the higher the ammonium sulfate content in the final scrubber liquid, particularly because of the cyanate hydrolysis at low pH values.

The volume ratio of urea ammonium sulfate sprayed in the first compartment to urea melt sprayed in the second compartment is for example between 1:2 and 2:1, e.g., about 1:1.

The urea ammonium sulfate used in the first compartment may for example comprise a water content of at most 5 wt%. Optionally, it comprises additives, e.g, about 0.4 to 0.8 wt%. The urea melt used in the second compartment may for example comprise a water content of at most 10 wt%, e.g., at most 5 wt%, and optionally up to 1.5 wt% additives, e.g., between 0.4 to 0.8 wt% additives. Suitable additives for the urea ammonium sulfate mixture as well as for the urea melt include formaldehyde, aluminium sulphate, micronutrients, and other hydrocarbon granulation additives or mixtures thereof. In a specific embodiment, the urea ammonium sulfate used in the first compartment comprises aluminium sulfate as a granulating aid, while the urea melt comprises formaldehyde.

The nuclei can be of any suitable natural or synthetic composition, such as soil, sand, biodegradable plastics, or fertilizers of a different type. Particularly useful are rejected and recycled undersized urea granules and crashed oversized urea granules resulting from a previous production. The nuclei may for example have an average particle size which is up to 80% smaller than the average particle size of the final granulate.

If the spraying liquid in the second fluidized bed is a pure urea melt, the process results in a granulate comprising granulate particles having a nucleus covered by a first layer comprising urea ammonia sulfate and an outer second layer comprising urea substantially free of ammonia sulfate. The outer urea layer effectively coats the urea ammonium sulfate layer and inhibits hygroscopic properties.

The disclosed process can effectively being realized in a granulator plant comprising a first compartment with sprayers connected to a source of a near-eutectic mixture of urea and an aqueous urea ammonium sulfate solution, and a second compartment connected to a source of a pure urea melt or a non-eutectic urea ammonium sulfate mixture as disclosed above.

The disclosure further pertains to a granulator plant, optionally as disclosed above, comprising a scrubber for scrubbing exhaust air from the granulator and a separator with an inlet connected to a discharge line for used scrubber liquid from the scrubber. This discharge line for used scrubber liquid is connected to a supply line for supplying fresh urea melt.

In a specific embodiment, the separator has an outlet connecting to a feed line for feeding sprayers, e.g., in a first granulator compartment for spraying a mixture of urea melt and an ammonium sulfate solution.

In a specific embodiment, the scrubber comprises:
a first scrubber compartment with first sprayers and an inlet for granulator exhaust air;
a second scrubber compartment with second sprayers, the second scrubber compartment being downstream of the first scrubber compartment,
a first water collection reservoir for collecting used scrubber liquid from the first scrubber compartment and partly from the second scrubber compartment;
a first circulation loop for returning scrubber liquid from the first water collection reservoir to the first sprayers;
a second water collection reservoir for collecting part of the used scrubber liquid from the second scrubber compartment;
a second circulation loop for returning scrubber liquid from the second water collection reservoir to the second sprayers;
wherein the second circulation loop is connected to a source of an acid. This way, the scrubbed urea concentrates in the first circulation loop. Adding the acid to the second circulation loop, limits chemical reactions between the urea content and the acid. The first and second scrubber compartments may for example be separated by means of a demister, such as a knit mesh or grid mesh.

All percentages mentioned in the disclosure are percentages by weight relative to the total weight of the respective composition.

The invention will now be further explained with reference to the drawing.

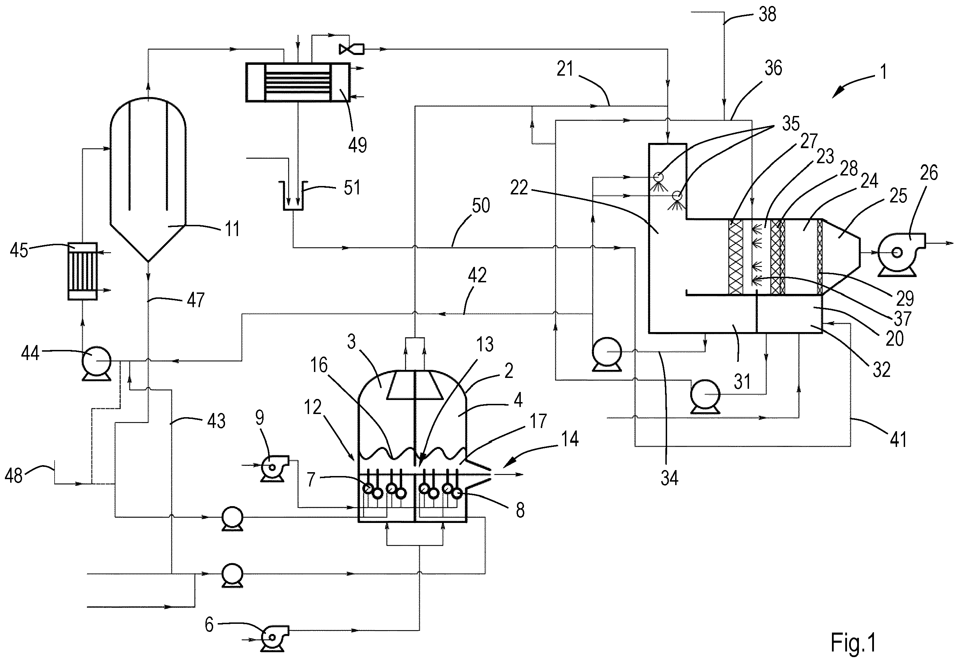

- Figure 1:: shows schematically an exemplary embodiment of a granulation plant according to the invention.

Figure 1 shows a granulation plant 1 comprising a granulator 2 with a first compartment 3 and a second compartment 4. The first and second compartments 3, 4 comprise floors (not shown) with openings for the passage of fluidization air, which is blown from a blower 6. In this exemplary embodiment, the two compartments 3, 4 comprise sprayers 7, 8 extending from the floors and connected to a source of atomization air 9. In other embodiments, sprayers can extend from one or more side walls and/or extend downward. The sprayers 7 in the first compartment 3 are connected to a separator 11 forming a source of a eutectic or near-eutectic aqueous solution of urea ammonium sulfate, as explained hereafter. The sprayers in the second compartment are connected to a source of urea melt. The first compartment 3 has a nuclei inlet port 12 connected to a source of nuclei, and an intermediate granulate port 13 at an opposite side of the first compartment 3 leading to the second compartment 4. The second compartment 4 comprises a granulate outlet port 14 opposite to the intermediate granulate port 13.

In use, nuclei gradually flow from the nuclei inlet 12 of the first compartment 3 to the intermediate granulate port 13. The nuclei are fluidized by the fluidization air blown into the first compartment 3 via the openings in the floor to form a first fluidized bed 16. The urea ammonium sulfate solution is sprayed into the first fluidized bed 16 by the sprayers 7 on the granulator floor. While the water content evaporates, the urea ammonium sulfate deposits on the passing nuclei and crystallizes to form intermediate granules. The first fluidized bed 16 has a bed temperature of 95 - 100°C, which is well below the crystallization temperature of the sprayed urea ammonium sulfate, yet high enough to ensure sufficient evaporation of the moisture content.

Nuclei and intermediate granulate material in the first fluidized bed 16 moves continuously in the direction of the intermediate granulate port 13 where it enters the second compartment 4 to form a second fluidized bed 17. Here the sprayers 8 spray the pure urea melt into the second fluidized bed 17, which has a bed temperature of 105 - 112°C. This temperature is below the crystallization temperature of the urea melt, but is higher than the bed temperature of the first fluidized bed. The bed temperature is also lower than the melting point of the urea ammonium sulfate layer on the intermediate granulate (about 121°C with a 0% water content). The granulate leaving the second compartment 4 has a nucleus core, a urea ammonium sulfate inner layer and a urea outer layer, all with a residual moisture content of at most 0,3 wt%.

Exhaust air from the first and second compartments 3, 4 is transported to a wet scrubber 20 via a line 21. In the exemplary embodiment of Figure 1, the wet scrubber 20 comprises a first scrubber compartment 22, a second scrubber compartment 23, a water separation compartment 24 and a clean air outlet 25 operatively connected to a discharge pump 26. The first and second scrubber compartments 22, 23 are separated by a first knit mesh or wire mesh demister 27. A further demister 28 separates the second scrubber compartment 23 from the water separation compartment 24. A third demister 29 separates the water separation compartment 24 from the clean air outlet 25. Below the first scrubber compartment 22 is a first water collection reservoir 31. Below the water separation compartment 24 is a second water collection reservoir 32. The second scrubber compartment 23 is partly above the first water collection reservoir 31 and partly above the second water collection reservoir 32. A first recirculation loop 34 returns water from the first water collection reservoir 31 to sprayers 35 in the first scrubber reservoir 31. A second recirculation loop 36 returns water from the second water collection reservoir 32 to sprayers 37 in the second scrubber reservoir 23. This second recirculation loop 36 is also connected to a source 38 of sulfuric acid to maintain the pH below 5. The second water collection reservoir 32 also has a fresh water inlet 41. All of the exhaust gas from the granulator 2 enters the scrubber via an inlet in the first scrubber compartment 22. As a result, the urea concentration will be substantially higher in the first water collection reservoir and the first recirculation loop. The urea concentration is substantially lower in the second recirculation loop, where the acid is added. This way, the chemical reaction between sulfuric acid and urea is limited.

The acidic water absorbs and separates ammonia and ammonium cyanate from the exhaust air entering the wet scrubber 20. The ammonia is solved as ammonium. The ammonium cyanate is not stable but tends to convert into urea or is hydrolyzed to ammonium and carbon dioxide. The ammonium forms ammonium sulfate with the sulfuric acid.

The first recirculation loop 34 comprises a branch line 42 towards a vacuum concentration unit with consecutively a connection to a supply line 43 for urea melt, a pump 44, a heat exchanger 45 and the separator 11. In the separator 11, a concentrated aqueous solution of urea ammonium sulfate is separated from the stream. The separated solution has an ammonium sulfate content of up to 12 wt%, a urea content of at least 80 wt% and a water content of about 1 - 5 wt%.
This forms a eutectic or near-eutectic mixture with all ammonium sulfate being dissolved. The aqueous solution is returned via a return line 47 to the sprayers 7 in the first granulator compartment 3. This return line 47 is provided with an inlet 48 for additives, such as aluminium sulfate as a granulation aid.

Separated water vapour leaves the separator 11 and is lead to a vacuum condenser 49 where it is separated into water and process air. The condensed water is returned to the first water collection reservoir 31 via a return line 50 which comprises a seal pot 51 where the water is mixed with fresh sulfuric acid. The process air from the condenser 49 is mixed with the exhaust air from the granulator 2 and returned to the first scrubber compartment 22.

Tests were run with the arrangement of Figure 1. The separator 11 was controlled to produce a urea ammonium sulfate solution with 5 wt% of water, up to 12 wt% of ammonium sulfate and at least 80 wt% of urea. Nuclei were supplied to form a fluidized bed continuously moving from the nuclei inlet 12 via the intermediate granulate port 13 to the granulate outlet 14 of the second compartment 4. The average bed temperature in the first compartment 3 was 90°C.

In the second compartment 4, a urea melt was sprayed with a 5 wt% water content. The sprayed volume of urea melt was about the same as the volume of urea ammonium sulfate sprayed in the first compartment 3. The average bed temperature in the second compartment 4 was about 112°C

The resulting granulate product comprised a nucleus, coated by an inner layer of urea aluminum sulfate and an outer urea layer. The residual moisture content was below 0,3 wt%.

In an alternative embodiment, the sprayers of the second compartment can be fed by a source of a hypereutectic mixture of a urea melt and, e.g., 18 - 20 wt% of ammonium sulfate in an aqueous solution, or a hypoeutectic mixture of a urea melt and at most about 2 wt% of ammonium sulfate in an aqueous solution.

## Claims

1. A process for the production of a urea ammonium sulfate granulate, using a granulator and providing a first fluidized bed of a granulate precursor material in a compartment of the granulator, the first fluidized bed continuously moving from a nuclei inlet to an outlet of the compartment;
wherein a first spraying liquid comprising a urea melt and an aqueous solution of ammonium sulfate is sprayed into the first fluidized bed to produce an intermediate granulate material, the first fluidized bed having a bed temperature below the crystallization temperature of the sprayed mixture;
wherein the intermediate granulate material is subsequently moved to a next compartment where it is fluidized to form a second fluidized bed while a second spraying liquid comprising a urea melt is sprayed into the second fluidized bed, the second fluidized bed having a bed temperature which is higher than the first fluidized bed and lower than the crystallization temperature of the sprayed second spraying liquid.

2. The process of claim 1, wherein the bed temperature of the second fluidized bed is maintained below the melting temperature of the dried mixture on the granulate precursor material.

3. The process of claim 1 or 2, wherein the bed temperature in the second compartment is 10 - 12°C higher than the bed temperature in the first compartment.

4. The process of any one of the preceding claims wherein the bed temperature in the first compartment is about 95 - 100°C and/or the bed temperature in the second compartment is about 105 - 112°C.

5. The process of any one of the preceding claims, wherein the mean residence time of the granulate precursor material in the second fluidized bed is controlled to produce a final granulate having a residual moisture content of at most 0,3 wt%.

6. The process of any preceding claim, wherein exhaust air from the granulator is scrubbed using an aqueous solution of sulfuric acid converting ammonium and ammonium cyanate from the exhaust to ammonium sulfate in an aqueous solution, which is collected and, optionally after adjustment of the ammonium sulfate concentration, used to produce said mixture.

7. The process of claim 6, wherein the aqueous solution of sulfuric acid has a pH below 5, e.g., below 3.

8. The process according to any preceding claim, wherein the first spraying liquid comprises a eutectic or near-eutectic mixture of urea ammonium sulfate in an aqueous solution;
and wherein the second spraying liquid is selected from the group comprising:
- a urea melt, or
- a hypereutectic mixture of a urea melt and at least 15 wt%, e.g., at least 18 wt.%, e.g. about 20 wt% of ammonium sulfate in an aqueous solution; or
- a hypoeutectic mixture of a urea melt and at most about 2 wt% of ammonium sulfate in an aqueous solution.

9. Granulate produced by the process of any one of the preceding claims, the granulate comprising granulate particles having a nucleus covered by a first layer comprising urea ammonia sulfate and an outer second layer comprising urea substantially free of ammonia sulfate or an outer second layer comprising at least 15 wt%, e.g., at least 18 wt% of ammonium sulfate.

10. Granulator plant for the process according to any one the preceding claims 1 - 8, comprising a first compartment (3) with sprayers (7) connected to a source of a mixture of the first spraying liquid and a second compartment (4) with sprayers (8) connected to a source of the second spraying liquid.

11. Granulator plant according to claim 10, comprising a scrubber (20) for scrubbing exhaust air from the granulator and a separator (11) with an inlet connected to a discharge line (42) for used scrubber liquid from the scrubber.

12. Granulator pant according to claim 11, wherein the discharge line (42) for used scrubber liquid is connected to a supply line for supplying fresh urea melt.

13. Granulator plant according to claim 11 or 12, wherein the separator (11) has an outlet connecting to a feed line for feeding the sprayers (7) in the first granulator compartment (3) .

14. Granulator plant according to claim 11, 12 or 13, wherein the scrubber (20) comprises:
a first scrubber compartment (22) with first sprayers (35) and an inlet for granulator exhaust air;
a second scrubber compartment (23) with second sprayers (37), the second scrubber compartment being downstream of the first scrubber compartment,
a first water collection reservoir (31) for collecting used scrubber liquid from the first scrubber compartment and partly from the second scrubber compartment;
a first circulation loop (34) for returning scrubber liquid from the first water collection reservoir to the first sprayers (35);
a second water collection reservoir (32) for collecting part of the used scrubber liquid from the second scrubber compartment;
a second circulation loop (36) for returning scrubber liquid from the second water collection reservoir (32) to the second sprayers (23);
wherein the second circulation loop is connected to a source of an acid.

15. Granulator plant according to claim 14, wherein the first and second scrubber compartments are separated by means of a demister, such as a knit mesh or grid mesh.
